# EUROPEAN PATENT APPLICATION

(11) **EP 4 821 892 A1**
(43) Date of publication of application: **14.10.2026**
(21) Application number: 26166464.3
(22) Date of filing: 20.03.2026
(51) Int. Cl.: C01G 53/506, C01G 53/82, H01M 4/525

(54) **METHOD FOR PRODUCING PRECURSOR OF POSITIVE ELECTRODE ACTIVE MATERIAL AND METHOD FOR PRODUCING POSITIVE ELECTRODE ACTIVE MATERIAL**

(30) Priority: 09.04.2025 JP 2025064483
(71) Applicant: Prime Planet Energy & Solutions, Inc., Chuo-ku, Tokyo 103-0022 (JP); The University of Tokyo, Bunkyo-ku, Tokyo 113-8654 (JP)
(72) Inventor: SUZUKI, Shinya, Tokyo, 103-0022 (JP); OUCHI, Takanari, Tokyo, 113-8654 (JP)
(74) Representative: Kuhnen & Wacker Patent- und Rechtsanwaltsbüro PartG mbB

(57) **Abstract**

Provided is a method for producing a precursor of a positive electrode active material in which uneven distribution of Mn in the center portion of particles is suppressed. The method for producing a precursor of a positive electrode active material of the present disclosure includes a step of adding a raw material solution containing Ni, Co, Mn, ammonia, an ammonium ion, and a carbonate ion to a precipitation solution to precipitate a carbonate containing Ni, Co, and Mn. The concentration of ammonia in the precipitation solution is lower than the concentration of ammonia in the raw material solution.

## Description

### BACKGROUND OF THE DISCLOSURE

### 1. Field

The present disclosure relates to a method for producing a precursor of a positive electrode active material.

### 2. Background

Lithium-ion secondary batteries are widely used in various fields as vehicle driving power sources, portable power sources, and the like. In the production of positive electrode active materials used in the positive electrode of lithium-ion secondary batteries, typically, first, a hydroxide or carbonate containing a metal source other than Li is produced as a precursor by a crystallization method. For example, when producing a carbonate that is a precursor of a lithium transition metal composite oxide, a crystallization reaction is performed using a reaction solution containing a transition metal, an ammonium ion, and a carbonate ion (see, for example, Patent Document 1).

On the other hand, in recent years, from the viewpoint of SDGs, material recycling of used lithium-ion secondary batteries has been progressing. Regarding material recycling, techniques are being developed to separate metal elements contained in positive electrode active materials from used lithium-ion secondary batteries and reuse them for the production of positive electrode active materials. As an example, according to ammonia leaching, an ammonia leachate containing Ni and Co can be obtained from battery waste (see, for example, Non-Patent Document 1).

### [Prior Art Documents]

### [Patent Documents]

[Patent Document 1] International Publication No. WO 2017/119457

### [Non-Patent Documents]

[Non-Patent Document 1] Waste Management, February 2017, vol. 60, p. 680-688

### SUMMARY

As a result of intensive studies by the present inventors, the following has been found. In material recycling of lithium-ion secondary batteries, by utilizing ammonia leaching, a leachate containing Ni, Co, Mn, ammonia, an ammonium ion, and a carbonate ion can be obtained. Furthermore, by evaporating ammonia from this leachate, a nickel cobalt manganese composite carbonate that is a precursor of a positive electrode active material can be generated. However, in this case, there is a problem that Mn precipitates preferentially first, and in the finally obtained carbonate particles, Mn is unevenly distributed in the center portion of the particles. When Mn is unevenly distributed in the center portion of the particles, the amount of Ni in the surface layer portion increases, which may lead to destabilization of the crystal structure of the positive electrode active material.

Therefore, an object of the present disclosure is to provide a method for producing a precursor of a positive electrode active material in which uneven distribution of Mn in the center portion of particles is suppressed.

The method for producing a precursor of a positive electrode active material of the present disclosure includes a step of adding a raw material solution containing Ni, Co, Mn, ammonia, an ammonium ion, and a carbonate ion to a precipitation solution to precipitate a carbonate containing Ni, Co, and Mn. The concentration of ammonia in the precipitation solution is lower than the concentration of ammonia in the raw material solution.

According to such a configuration, a precursor of a positive electrode active material in which uneven distribution of Mn in the center portion of particles is suppressed can be produced.

### BRIEF DESCRIPTION OF THE DRAWINGS

FIG. 1 is a flowchart showing each step of recycling of waste of lithium-ion secondary batteries, including the step of the method for producing a precursor of a positive electrode active material according to the present disclosure;
FIG. 2 is a vertical cross-sectional view schematically showing the internal structure of an example of a lithium-ion secondary battery;
FIG. 3 is a schematic exploded view showing the configuration of the electrode body of the lithium-ion secondary battery shown in FIG. 2;
FIG. 4 is a cross-sectional SEM image of particles of the nickel cobalt manganese composite carbonate obtained in Comparative Example 1;
FIG. 5 is an Mn mapping image of a cross-section of particles of the nickel cobalt manganese composite carbonate obtained in Comparative Example 1;
FIG. 6 is an Ni mapping image of a cross-section of particles of the nickel cobalt manganese composite carbonate obtained in Comparative Example 1;
FIG. 7 is a cross-sectional SEM image of particles of the nickel cobalt manganese composite carbonate obtained in Example 4;
FIG. 8 is an Mn mapping image of a cross-section of particles of the nickel cobalt manganese composite carbonate obtained in Example 4; and
FIG. 9 is an Ni mapping image of a cross-section of particles of the nickel cobalt manganese composite carbonate obtained in Example 4.

### DETAILED DESCRIPTION OF THE PREFERRED EMBODIMENTS

Hereinafter, embodiments according to the present disclosure will be described with reference to the drawings. It should be noted that matters not mentioned in the present specification but necessary for carrying out the present disclosure can be grasped as design matters of a person skilled in the art based on the prior art in the relevant field. The present disclosure can be carried out based on the content disclosed in the present specification and technical common knowledge in the relevant field. In the following drawings, the same reference numerals are assigned to members and portions having the same functions for explanation. Further, dimensional relationships (length, width, thickness, etc.) in each drawing do not reflect actual dimensional relationships. It should be noted that in the present specification, a numerical range expressed as "A to B" includes A and B.

It should be noted that in the present specification, "secondary battery" refers to a power storage device capable of repeated charging and discharging. Further, in the present specification, "lithium-ion secondary battery" refers to a secondary battery that uses lithium ions as charge carriers and achieves charging and discharging by the transfer of charges accompanying lithium ions between positive and negative electrodes.

The method for producing a precursor of a positive electrode active material of the present disclosure includes a step of adding a raw material solution containing nickel (Ni), cobalt (Co), manganese (Mn), ammonia (NH₃), an ammonium ion (NH₄⁺), and a carbonate ion (CO₃²⁻) to a precipitation solution to precipitate a carbonate containing Ni, Co, and Mn (hereinafter also referred to as "crystallization step"). Here, the concentration of ammonia in the precipitation solution is lower than the concentration of ammonia in the raw material solution.

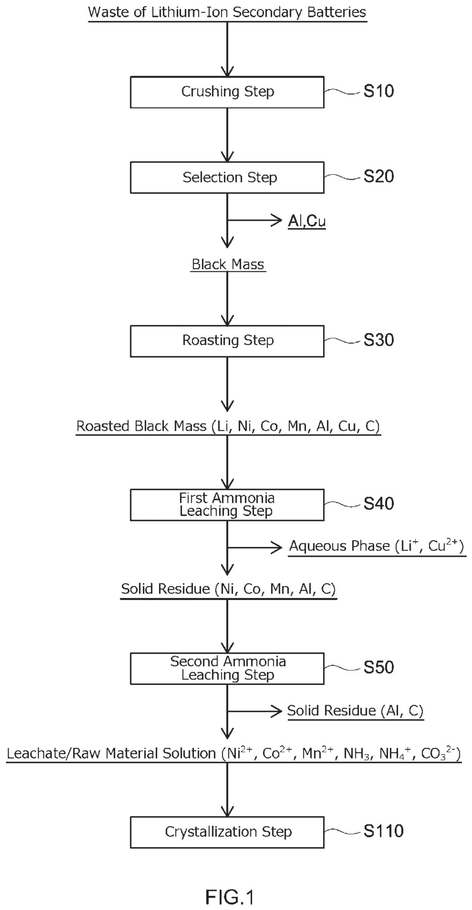

The raw material solution used in the production method of the present disclosure can be generated during recycling of waste of lithium-ion secondary batteries. Therefore, FIG. 1 shows each step of a series of recycling of waste of lithium-ion secondary batteries that utilizes the method for producing a precursor of a positive electrode active material of the present disclosure. It should be noted that the step essential for the method for producing a precursor of a positive electrode active material of the present disclosure shown in FIG. 1 is the crystallization step S110, and steps other than this are optional steps.

Therefore, the method for producing a precursor of a positive electrode active material of the present disclosure may be applied to material recycling of secondary batteries (particularly lithium-ion secondary batteries). Therefore, first, an example of a general configuration of a lithium-ion secondary battery will be described.

### <Lithium-Ion Secondary Battery>

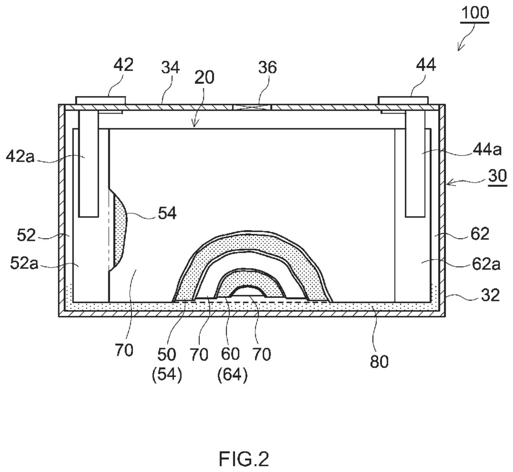

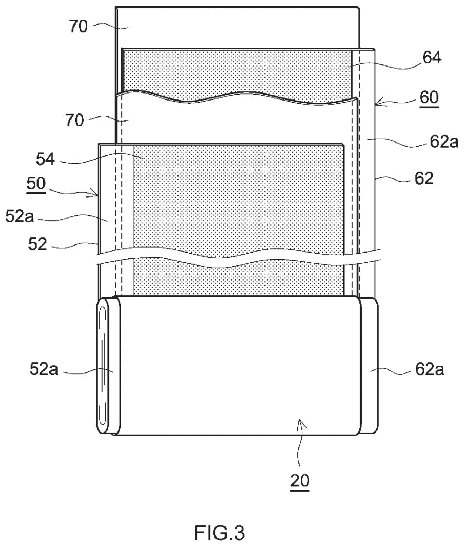

An example of the structure of a lithium-ion secondary battery is shown in FIGS. 2 and 3. FIG. 2 is a vertical cross-sectional view schematically showing the internal structure of an example of a lithium-ion secondary battery. FIG. 3 is a schematic exploded view showing the electrode body of the lithium-ion secondary battery shown in FIG. 2. It should be noted that the following description of the lithium-ion secondary battery is for convenience of understanding and does not limit the method for producing a precursor of a positive electrode active material of the present disclosure in any way.

As shown in FIG. 2, a lithium-ion secondary battery 100 is a sealed battery in which a flat-shaped electrode body 20 and a non-aqueous electrolyte (not shown) are housed inside a battery case 30. As shown in FIG. 2, the battery case 30 is composed of an exterior body 32 that houses the electrode body 20, and a lid 34 that seals an opening of the exterior body 32. The exterior body 32 and the lid 34 are welded and sealed by laser welding or the like. As the material of the battery case 30, for example, aluminum, aluminum alloy, resin, or the like is used.

In the illustrated example, the battery case 30 has a prismatic shape. However, the shape of the battery case 30 is not limited to this, and may be, for example, a cylindrical shape. Alternatively, the battery case 30 may be a laminate case having a gas barrier layer such as an aluminum layer and a sealant layer containing a thermoplastic resin.

The battery case 30 includes a positive electrode terminal 42 and a negative electrode terminal 44 for external connection. Further, the battery case 30 is provided with a safety valve 36 set to release the internal pressure when the internal pressure of the battery case 30 rises to a predetermined level or higher. The battery case 30 is provided with an injection port (not shown) for injecting the non-aqueous electrolyte. The positive electrode terminal 42 is electrically connected to a positive electrode current collecting plate 42a. The negative electrode terminal 44 is electrically connected to a negative electrode current collecting plate 44a.

As shown in FIGS. 2 and 3, the electrode body 20 has a form in which an elongated positive electrode sheet 50 and an elongated negative electrode sheet 60 are superposed with two elongated separator sheets 70 interposed therebetween and wound in the longitudinal direction. Therefore, in the present embodiment, the electrode body 20 is a wound electrode body. However, the electrode body 20 is not limited to this, and may be a stacked-type electrode body in which a plurality of positive electrodes and a plurality of negative electrodes are alternately stacked with separators interposed therebetween.

As shown in FIG. 2, in the positive electrode sheet 50, a positive electrode active material layer 54 is formed on one side or both sides (here, both sides) of a positive electrode current collector 52 along the longitudinal direction. The positive electrode sheet 50 has a positive electrode active material layer non-formed portion 52a, which is a portion where the positive electrode active material layer 54 is not formed and the positive electrode current collector 52 is exposed. The positive electrode current collecting plate 42a is joined to the positive electrode active material layer non-formed portion 52a.

An example of the positive electrode current collector 52 constituting the positive electrode sheet 50 includes aluminum foil and the like. The positive electrode active material layer 54 contains a positive electrode active material. Typically, the positive electrode active material is a lithium nickel cobalt manganese-based composite oxide. The positive electrode active material layer 54 may contain a conductive material (e.g., carbon black, carbon nanotube, etc.), a binder (e.g., polyvinylidene fluoride, etc.), and the like.

The content of the positive electrode active material in the positive electrode active material layer 54 is desirably 70% by mass or more, and more desirably 85% by mass or more and 99% by mass or less. The content of the conductive material in the positive electrode active material layer 54 is desirably 0.1% by mass or more and 20% by mass or less, and more desirably 0.3% by mass or more and 15% by mass or less. The content of the binder in the positive electrode active material layer 54 is desirably 0.4% by mass or more and 15% by mass or less, and more desirably 0.5% by mass or more and 10% by mass or less.

As shown in FIG. 3, in the negative electrode sheet 60, a negative electrode active material layer 64 is formed on one side or both sides (here, both sides) of a negative electrode current collector 62 along the longitudinal direction. The negative electrode sheet 60 has a negative electrode active material layer non-formed portion 62a, which is a portion where the negative electrode active material layer 64 is not formed and the negative electrode current collector 62 is exposed. The negative electrode current collecting plate 44a is joined to the negative electrode active material layer non-formed portion 62a.

An example of the negative electrode current collector 62 constituting the negative electrode sheet 60 includes copper foil. The negative electrode active material layer 64 contains a negative electrode active material. Examples of the negative electrode active material include carbon-based negative electrode active materials (e.g., graphite, hard carbon, soft carbon, etc.), and the like. The negative electrode active material layer 64 may contain a binder (e.g., styrene butadiene rubber (SBR), etc.), a thickener (e.g., carboxymethyl cellulose (CMC), etc.), and the like.

The content of graphite in the negative electrode active material layer 64 is desirably 90% by mass or more, and more desirably 95% by mass or more and 99% by mass or less. The content of the binder in the negative electrode active material layer 64 is desirably 0.1% by mass or more and 8% by mass or less, and more desirably 0.5% by mass or more and 3% by mass or less. The content of the thickener in the negative electrode active material layer 64 is desirably 0.3% by mass or more and 3% by mass or less, and more desirably 0.5% by mass or more and 2% by mass or less.

Examples of the separator 70 include porous resin sheets such as polyethylene and polypropylene. The porous sheet may have a single-layer structure or a multi-layer structure. A heat resistant layer (HRL) may be provided on the surface of the separator 70.

The non-aqueous electrolyte typically contains a non-aqueous solvent and a supporting salt (in other words, an electrolyte salt). Examples of the non-aqueous solvent include carbonates (e.g., ethylene carbonate, ethyl methyl carbonate, dimethyl carbonate, etc.), esters, ethers, and the like. Examples of the supporting salt include lithium salts such as LiPF₆. The concentration of the supporting salt is not particularly limited, but is desirably 0.7 mol/L to 1.3 mol/L. The non-aqueous electrolyte may contain various additives such as a gas generating agent and a film forming agent. It should be noted that in the present embodiment, a non-aqueous electrolyte is used as the electrolyte, but the electrolyte may be a solid electrolyte.

The lithium-ion secondary battery 100 is used, for example, for vehicle-mounted applications (i.e., for driving power sources of vehicles such as electric vehicles (BEV), hybrid vehicles (HEV), plug-in hybrid vehicles (PHEV)), power source applications for electronic devices, and the like.

As described above, in the positive electrode of a lithium-ion secondary battery, Li, Ni, Co, and Mn are typically used as constituent metal elements of the lithium nickel cobalt manganese-based composite oxide that is the positive electrode active material. Al is generally used for the positive electrode current collector. Cu is generally used for the negative electrode current collector. In addition, in the lithium-ion secondary battery, Li is used in the non-aqueous electrolyte. Further, Al may be used for the battery case.

### <Each Step of Recycling of Waste of Lithium-Ion Secondary Batteries>

Recycling of waste of lithium-ion secondary batteries will be described along with FIG. 1. Waste of lithium-ion secondary batteries is, for example, used lithium-ion secondary batteries, defective lithium-ion secondary batteries, and the like. Typically, the waste contains Li, Ni, Co, Mn, and O derived from the positive electrode active material; Al derived from the positive electrode current collector; C derived from the negative electrode active material; Cu derived from the negative electrode current collector; Li derived from the non-aqueous electrolyte; Al derived from the battery case; and the like as major elements. It should be noted that the waste of lithium-ion secondary batteries may be waste of constituent members such as an electrode body. It should be noted that the metal elements described in FIG. 1 may take the form of oxides, carbonates, and the like as described later.

As shown in FIG. 1, the recycling (i.e., recycling method) includes a crushing step S10 of crushing waste of lithium-ion secondary batteries, a selection step S20 of selecting the crushed product obtained by the crushing step S10 to remove metallic pieces remaining in the crushed product, a roasting step S30 of reducing and roasting the black mass obtained by the selection step S20, a first ammonia leaching step S40 of performing ammonia leaching on the roasted black mass obtained in the roasting step S30 to remove Cu from the roasted black mass, and a second ammonia leaching step S50 of performing ammonia leaching on the solid residue obtained in the first ammonia leaching step S40 to obtain a leachate containing Ni²⁺, Co²⁺, Mn²⁺, NH₃, NH₄⁺, and CO₃²⁻. In addition, the recycling includes a crystallization step S110 of using this leachate as a raw material solution and adding the raw material solution to a precipitation solution to precipitate a carbonate containing Ni, Co, and Mn.

### <Crushing Step S10>

In the recycling, a crushing step S10 of crushing waste of lithium-ion secondary batteries is performed. The crushing step S10 can be performed according to a known method. For example, waste of lithium-ion secondary batteries can be crushed using a crushing device such as a known crusher, pulverizer, or disintegrator. Thereby, a crushed product of waste of lithium-ion secondary batteries is obtained.

Here, in the crushing step S10, it is not necessary to crush the entirety of the waste of lithium-ion secondary batteries. For example, the battery case of the lithium-ion secondary battery may be opened to take out the electrode body, and only the electrode body may be crushed. In this case, the constituent material of the battery case can be efficiently removed.

It should be noted that pretreatment may be performed on the waste of lithium-ion secondary batteries before the crushing step S10. For example, before the crushing step S10, a discharge treatment step of performing discharge treatment on the waste of lithium-ion secondary batteries may be carried out. Thereby, recycling of waste of lithium-ion secondary batteries can be performed more safely. The discharge treatment can be performed according to a known method.

### <Selection Step S20>

Next, in the recycling, a selection step S20 of selecting the above crushed product to remove metal pieces is performed. Typical examples of metal pieces are pieces of battery cases, pieces of positive electrode current collectors, and pieces of negative electrode current collectors. Typically, pieces of battery cases contain Al, pieces of positive electrode current collectors contain Al, and pieces of negative electrode current collectors contain Cu.

The selection step S20 can be performed according to a known method. Specifically, for example, metal pieces can be removed by performing sieving on the crushed product. Further, depending on the material of the metal pieces, magnetic separation may be performed.

By carrying out the selection step S20, it is possible to remove most of Al and Cu contained in the waste. Therefore, in the selection step S20, it is desirable to remove at least Al and Cu contained in the waste.

After the metal pieces are removed, typically, a black powder is obtained. This black powder is called black mass. Therefore, by carrying out the selection step S20, black mass is obtained. The metal elements contained in the black mass are typically Li, Ni, Co, Mn, Al, Cu, and the like. Ni, Co, and Mn are typically derived from the positive electrode active material and are in the form of composite oxides. Al and Cu are derived from metal pieces and the like that could not be completely removed in the selection step S20. Further, the black mass typically contains C derived from the negative electrode active material and the like.

### <Roasting Step S30>

Next, in the recycling, a roasting step S30 of reducing and roasting the black mass is performed. Here, reducing roasting refers to roasting in which at least a part of the metal in the metal oxide contained in the black mass is reduced. In the roasting step, in particular, Ni and Co contained in the black mass in the form of composite oxides are reduced to metal.

Such roasting is typically performed in an atmosphere with an oxygen concentration of 5 vol% or less. The oxygen concentration of this atmosphere is desirably 1 vol% or less. The atmosphere is particularly desirably an inert gas atmosphere such as argon gas or nitrogen gas.

The roasting temperature is, for example, 650°C to 1500°C, and desirably 750°C to 1000°C. The roasting time may be appropriately selected according to the roasting temperature, and is, for example, 1 hour to 24 hours, and desirably 4 hours to 12 hours.

By carrying out the roasting step S30, roasted black mass can be obtained. The roasted black mass typically contains Li, Ni, Co, Mn, Al, Cu, and C. Li is typically in the form of Li₂CO₃. Mn is typically in the form of MnO. Ni, Co, Al, and Cu are typically present in metallic form.

Here, among the components contained in the roasted black mass, Li₂CO₃ has particularly high solubility in water. Therefore, in the recycling, a water leaching step of bringing the roasted black mass into contact with water to remove Li₂CO₃ from the roasted black mass may be carried out.

When the roasted black mass is brought into contact with water, Li₂CO₃ contained in the roasted black mass is preferentially dissolved in water. Therefore, Li₂CO₃ can be preferentially transferred to the aqueous phase to remove Li₂CO₃ from the roasted black mass.

The water leaching step can be performed according to a known method. Specifically, for example, it can be performed by immersing the roasted black mass in water and appropriately stirring. The leaching may be performed at room temperature or under heating.

### <First Ammonia Leaching Step S40>

In the recycling, a first ammonia leaching step S40 of performing ammonia leaching on the roasted black mass to remove Cu from the roasted black mass is performed.

In the first ammonia leaching step S40, ammonia leaching is performed on the roasted black mass, so a first ammonia aqueous solution containing at least water and ammonia is used as a leaching agent. The first ammonia aqueous solution may contain only water and ammonia, or may contain other components. An example of other components is ammonium carbonate. When the first ammonia aqueous solution contains ammonium carbonate, the leaching rate of Cu can be further increased.

It should be noted that as described above, Li₂CO₃ has particularly high solubility in water, and also has high solubility in the first ammonia aqueous solution. Therefore, when the water leaching step is not carried out, or when Li₂CO₃ remains in the roasted black mass after carrying out the water leaching step, in the first ammonia leaching step S40, Li₂CO₃ can also be removed from the roasted black mass by ammonia leaching.

The concentration of ammonia in the first ammonia aqueous solution is not particularly limited as long as Cu can be leached. From the viewpoint of suppressing dissolution of metals other than Cu and Li, the concentration of ammonia in the first ammonia aqueous solution is desirably 0.01% by mass or more, and more desirably 0.1% by mass or more. Further, the upper limit of the concentration of ammonia is desirably 5% by mass or less, and more desirably 2% by mass or less. From the viewpoint of leaching ability and ease of handling, the concentration of ammonia is particularly desirably 0.1% by mass to 2% by mass.

The amount of ammonium carbonate in the first ammonia aqueous solution is desirably 0.5 molar times to 1.5 molar times, more desirably 0.8 molar times to 1.2 molar times, and still more desirably equimolar to the amount of Cu contained in the roasted black mass. On the other hand, ammonium carbonate promotes the leaching of Ni and Co. The amount of ammonium carbonate in the first ammonia aqueous solution is desirably 0.20 molar times or less, more desirably 0.10 molar times or less, and still more desirably 0.05 molar times or less of the total amount of Ni and Co contained in the roasted black mass.

The amount of the first ammonia aqueous solution used is not particularly limited, and may be about the same as the amount of ammonia aqueous solution used in known ammonia leaching methods. For example, the amount of the first ammonia aqueous solution used is an amount that completely immerses the roasted black mass.

Dissolution of Cu into ammonia water normally involves oxygen. Therefore, the first ammonia leaching step S40 may be performed in the air using oxygen in the air. However, from the viewpoint of a high dissolution rate, it is desirable to supply oxygen to the first ammonia aqueous solution during leaching. As for the amount of oxygen supplied, it is desirable that oxygen is supplied in excess with respect to the element to be oxidized contained in the roasted black mass (i.e., Cu).

The supply of oxygen can suitably be performed by introducing a gas containing oxygen (e.g., oxygen gas, air, etc.) into the first ammonia aqueous solution by bubbling or the like. The supply of oxygen can also be performed by sealing a container and introducing a gas containing oxygen therein while pressurizing.

The first ammonia leaching step S40 can be performed, for example, as follows. A container to which heating means such as a heater, temperature measuring means such as a thermometer or a temperature sensor, stirring means such as a stirring blade or a magnetic stirrer, and the like are attached as necessary is prepared. Further, if necessary, a bubbling device is prepared.

The roasted black mass and the first ammonia aqueous solution are charged into the container. If necessary, a gas containing oxygen is supplied as bubbles to the first ammonia aqueous solution by the bubbling device.

The leaching temperature is not particularly limited, and is desirably more than 0°C and 80°C or less, more desirably 10°C or more and 50°C or less, and still more desirably 15°C or more and 35°C or less. The leaching time is not particularly limited, and is, for example, 0.5 hours to 48 hours, desirably 1 hour to 24 hours, and more desirably 1.5 hours to 12 hours. It is desirable to perform stirring during ammonia leaching. The stirring speed is not particularly limited, but is, for example, 200 rpm to 2000 rpm, desirably 300 rpm to 1000 rpm, and more desirably 400 rpm to 800 rpm.

Ammonia leaching can be terminated by performing solid-liquid separation such as filtration. By ammonia leaching, Cu and Li are selectively transferred to the aqueous phase. Therefore, by this solid-liquid separation, as shown in FIG. 1, an aqueous phase that contains Cu²⁺ and may contain Li⁺ (i.e., a first ammonia aqueous solution containing Cu²⁺ and may contain Li⁺), and a solid residue containing Ni, Co, Mn, Al, and C can be obtained. The first ammonia leaching step S40 can be carried out as described above.

Here, during ammonia leaching in the first ammonia leaching step S40, insoluble precipitates may be generated on the surface of the roasted black mass. This insoluble precipitate is considered to be a compound containing Ni, Co, and Cu. This insoluble precipitate can be removed by performing ammonia leaching in a state where the oxygen concentration is low.

Therefore, as one embodiment of the first ammonia leaching step S40, the first ammonia leaching step S40 may perform leaching on the roasted black mass using a first ammonia aqueous solution (A) having a concentration of 2.5 mol/L or less in the presence of oxygen, and then perform leaching on the obtained solid residue using a first ammonia aqueous solution (B) under an inert gas atmosphere. According to this embodiment, the recovery rate of Cu becomes particularly high. As the leaching in the presence of oxygen, it is desirable to perform leaching while supplying a gas having an oxygen concentration of 21 vol% or more (e.g., air, desirably oxygen gas) into the container containing the first ammonia aqueous solution (A). As the method for supplying the gas, bubbling for blowing gas into the solution is desirable.

In this embodiment, it is desirable to supply oxygen gas into the container containing the first ammonia aqueous solution (A). It is desirable to supply an inert gas (e.g., nitrogen gas, etc.) into the container containing the first ammonia aqueous solution (B). As the supply method, bubbling for blowing gas into the solution is desirable. The concentration of the first ammonia aqueous solution (A) is desirably 0.1 mol/L to 1.0 mol/L. The concentration of the first ammonia aqueous solution (B) is desirably 5 mol/L or more, and more desirably 10 mol/L or more and 16.0 mol/L or less. The leaching with the first ammonia aqueous solution (A) and the leaching with the first ammonia aqueous solution (B) may be repeatedly performed.

It should be noted that Cu²⁺ can be precipitated and recovered as CuO by evaporating ammonia from the aqueous phase obtained in the first ammonia leaching step. When a hydroxide (e.g., lithium hydroxide) is added to the aqueous phase and then ammonia is evaporated, Cu²⁺ can be recovered as Cu(OH)₂. At this time, when ammonia is evaporated, the lithium component remains dissolved in the aqueous phase, so Cu and Li can be separated by solid-liquid separation.

Evaporation of ammonia can be performed according to a known method. For example, ammonia can be evaporated by charging the aqueous phase into an open container and heating under stirring. The heating temperature is desirably 50°C or more, more desirably 70°C or more, and still more desirably 90°C or more. The heating temperature may be less than the boiling point of water (i.e., 100°C). The heating time is, for example, 0.5 hours or more and 24 hours or less, and desirably 2 hours or more and 12 hours or less. The stirring speed is 200 rpm to 2000 rpm, and desirably 400 rpm to 800 rpm.

The evaporated ammonia can be recovered using a known ammonia collection device. The recovered ammonia can be reused in steps using ammonia in recycling of waste of lithium-ion secondary batteries.

It should be noted that when chlorine gas is mixed in the atmosphere of roasting in the roasting step S30, Li is obtained in the form of LiCl, and when hydrogen gas is mixed in the atmosphere of roasting, Li is obtained in the form of LiOH. Even in these cases, since these lithium compounds have high solubility in water, the first ammonia leaching step S40 can be performed in the same manner.

### <Second Ammonia Leaching Step S50>

In the recycling, a second ammonia leaching step S50 of performing ammonia leaching on the solid residue obtained in the first ammonia leaching step S40 to obtain a leachate containing Ni²⁺, Co²⁺, Mn²⁺, NH₃, NH₄⁺, and CO₃²⁻ is performed.

In the second ammonia leaching step S50, a second ammonia aqueous solution containing ammonia (NH₃) and ammonium carbonate ((NH₄)₂CO₃) is used as a leaching agent so that the obtained leachate contains NH₃, NH₄⁺, and CO₃²⁻. With this leaching agent, Ni, Co, and Mn are preferentially leached. The second ammonia aqueous solution may contain only water, ammonia, and ammonium carbonate, or may further contain other components in addition to these.

In the second ammonia aqueous solution, the concentration of ammonia is not particularly limited, and may be, for example, 1% by mass or more and the saturated concentration (i.e., about 35% by mass) or less. The concentration of ammonia in the second ammonia aqueous solution is desirably 5% by mass or more, more desirably 10% by mass or more, and still more desirably 15% by mass or more. From the viewpoint of leaching ability and ease of handling, the concentration of ammonia is particularly desirably 15% by mass to 25% by mass.

Ammonium carbonate acts as a pH adjuster. The amount of ammonium carbonate in the second ammonia aqueous solution is an amount such that the pH (25°C) of the second ammonia aqueous solution is desirably 9 to 12, more desirably 10 to 11. The concentration of ammonium carbonate in the second ammonia aqueous solution is desirably 0.5 mol/L or more and 3 mol/L or less, more desirably 1 mol/L or more and 3 mol/L or less, and still more desirably 1.5 mol/L or more and 2.5 mol/L or less.

The amount of the second ammonia aqueous solution used is not particularly limited, and may be about the same as the amount of ammonia aqueous solution used in known ammonia leaching methods. For example, the amount of the second ammonia aqueous solution used is an amount that completely immerses the object.

Here, the ammonia leaching in the second ammonia leaching step S50 may be performed while supplying a gas to the second ammonia aqueous solution. In this case, the selectivity of leaching of Ni, Co, and Mn changes depending on the concentration of oxygen contained in the gas. Specifically, the higher the oxygen concentration of the supplied gas, the more preferentially Ni and Co are leached. On the other hand, the lower the oxygen concentration of the supplied gas, the more preferentially Mn is leached.

The second ammonia leaching step S50 can be performed, for example, as follows. A container to which heating means such as a heater, temperature measuring means such as a thermometer or a temperature sensor, stirring means such as a stirring blade or a magnetic stirrer, and the like are attached as necessary is prepared. Further, if necessary, a bubbling device is prepared.

The solid residue and the second ammonia aqueous solution are charged into the container. If necessary, a gas is supplied into the container containing the second ammonia aqueous solution. Desirably, the gas is supplied as bubbles to the second ammonia aqueous solution by the bubbling device.

The second ammonia leaching step S50 may be performed at room temperature (i.e., 25±10°C) or under heating. The leaching temperature is desirably more than 0°C and 80°C or less, more desirably 10°C or more and 50°C or less, and still more desirably 15°C or more and 35°C or less.

The leaching time can be appropriately determined according to the leaching temperature. The higher the leaching temperature, the shorter the time required to complete leaching. The leaching time is, for example, 1 hour or more, desirably 2 hours or more, and more desirably 4 hours or more. On the other hand, from the viewpoint of operational efficiency, the leaching time is, for example, 48 hours or less, desirably 24 hours or less, and more desirably 10 hours or less.

It is desirable to perform stirring during leaching. The stirring speed is not particularly limited, but is desirably 200 rpm or more, more desirably 400 rpm or more, and still more desirably 500 rpm or more. The stirring speed may be 2000 rpm or less, 1000 rpm or less, or 800 rpm or less.

Ammonia leaching can be terminated by performing solid-liquid separation such as filtration. By ammonia leaching, Ni, Co, and Mn are selectively transferred to the aqueous phase. Therefore, by this solid-liquid separation, as shown in FIG. 1, a leachate containing a Ni ion, a Co ion, a Mn ion, ammonia, an ammonium ion, and a carbonate ion (i.e., a second ammonia aqueous solution containing a Ni ion, a Co ion, a Mn ion, ammonia, an ammonium ion, and a carbonate ion), and a solid residue containing Al and C can be obtained. The second ammonia leaching step S50 can be carried out as described above. This leachate can be used as the raw material solution containing a Ni ion, a Co ion, a Mn ion, ammonia, an ammonium ion, and a carbonate ion in the crystallization step S110.

Here, as described above, when ammonia leaching is performed while supplying a gas into the container containing the second ammonia aqueous solution, the selectivity of leaching of Ni, Co, and Mn changes depending on the concentration of oxygen contained in the gas. Therefore, in the second ammonia leaching step S50, by performing leaching of two or more stages in which the type of gas to be supplied is changed, it is possible to obtain all of Ni, Co, and Mn at a high recovery rate.

As one specific embodiment, the second ammonia leaching step S50 includes an Mn leaching step of performing leaching on the solid residue using a second ammonia aqueous solution (A) to leach Mn into a first aqueous phase, and a Ni, Co leaching step of performing leaching on the solid residue obtained in the Mn leaching step using a second ammonia aqueous solution (B) to leach Ni and Co into a second aqueous phase. Here, the amount of dissolved oxygen in the second ammonia aqueous solution (A) in the leaching in the Mn leaching step is less than the amount of dissolved oxygen in the second ammonia aqueous solution (B) in the leaching in the Ni, Co leaching step.

In this embodiment, in the Mn leaching step, Mn can be recovered at a high recovery rate in the first aqueous phase, and in the Ni, Co leaching step, Ni and Co leaching can be recovered at a high recovery rate in the second aqueous phase. Then, by combining the first aqueous phase and the second aqueous phase, a leachate containing a Ni ion, a Co ion, a Mn ion, ammonia, an ammonium ion, and a carbonate ion can be obtained, and this can be used as the raw material solution in the crystallization step S110.

The second ammonia aqueous solution (A) used in the Mn leaching step and the second ammonia aqueous solution (B) used in the Ni, Co leaching step correspond to the above second ammonia aqueous solution, and these may have the same composition or different compositions. It is advantageous from a management standpoint that the second ammonia aqueous solution (A) and the second ammonia aqueous solution (B) have the same composition.

So that the amount of dissolved oxygen in the second ammonia aqueous solution (A) in the leaching in the Mn leaching step is less than the amount of dissolved oxygen in the second ammonia aqueous solution (B) in the leaching in the Ni, Co leaching step, in the Mn leaching step, it is desirable that leaching is performed while supplying a gas with an oxygen concentration of 21 vol% or less into the container containing the second ammonia aqueous solution (A). The oxygen concentration of the supplied gas is desirably 18 vol% or less, more desirably 5 vol% or less, and still more desirably 1 vol% or less. The gas supplied in the Mn leaching step is particularly desirably an inert gas (e.g., nitrogen gas, argon gas, etc.). As the method for supplying the gas, bubbling is desirable.

So that the amount of dissolved oxygen in the second ammonia aqueous solution (A) in the leaching in the Mn leaching step is less than the amount of dissolved oxygen in the second ammonia aqueous solution (B) in the leaching in the Ni, Co leaching step, in the Ni, Co leaching step, it is desirable that leaching is performed while supplying a gas with an oxygen concentration of 50 vol% or more into the container containing the second ammonia aqueous solution (B). The oxygen concentration of the supplied gas is desirably 60 vol% or more, more desirably 90 vol% or more, and particularly desirably 99 vol% or more. The gas supplied in the Ni, Co leaching step is particularly desirably oxygen gas. As the method for supplying the gas, bubbling is desirable. Regarding the amount of gas supplied in the Ni, Co leaching step, it is desirable that the amount of oxygen supplied is equimolar or more, more desirably 2 molar times or more and 100 molar times or less, and still more desirably 3 molar times or more and 100 molar times or less with respect to the total of Ni and Co.

As for the procedure of this one embodiment, leaching is performed on the solid residue using a gas with a predetermined oxygen concentration and the second ammonia aqueous solution (A), and then solid-liquid separation is performed to obtain a leachate and a solid residue. Thereby, the Mn leaching step is carried out. Leaching is performed on the obtained solid residue using a gas with a predetermined oxygen concentration and the second ammonia aqueous solution (B), and then solid separation is performed to obtain a leachate and a solid residue. Thereby, the Ni, Co leaching step is carried out. The leachate obtained in the Mn leaching step and the leachate obtained in the Ni, Co leaching step are mixed.

### <Crystallization Step S110>

In the crystallization step S110, a raw material solution containing a Ni ion (Ni²⁺), a Co ion (Co²⁺), a Mn ion (Mn²⁺), ammonia (NH₃), an ammonium ion (NH₄⁺), and a carbonate ion (CO₃²⁻) is added to a precipitation solution having a lower ammonia concentration than the raw material solution.

The raw material solution is typically an aqueous solution. It is desirable that the raw material solution includes a solution generated in recycling of waste of lithium-ion secondary batteries. This solution is typically an ammonia leachate containing at least one selected from the group consisting of Ni, Co, and Mn. In particular, as the raw material solution, the leachate obtained in the second ammonia leaching step S50 described above can be used. However, the raw material solution is not limited to this.

For example, the raw material solution is an aqueous solution obtained by dissolving a water-soluble salt of Mn in an ammonia leachate containing Ni, Co, ammonia, and ammonium carbonate obtained by another recycling method of waste of lithium-ion secondary batteries described above. For example, the raw material solution is an aqueous solution obtained by adding at least one of a water-soluble salt of Ni, a water-soluble salt of Co, and a water-soluble salt of Mn to the leachate obtained in the second ammonia leaching step S50 to adjust the molar ratio of Ni, Co, and Mn. Alternatively, for example, the raw material solution is an aqueous solution obtained by dissolving a water-soluble salt of Ni, a water-soluble salt of Co, a water-soluble salt of Mn, ammonia, and ammonium carbonate in water.

The pH of the raw material solution at 25°C is desirably within a range of 10.0 to 12.0 from the viewpoint of preventing Ni, Co, and Mn from precipitating during storage. The pH of the raw material solution at 25°C can be adjusted by the amount or concentration of a Ni ion, a Co ion, a Mn ion, ammonia (NH₃), an ammonium ion (NH₄⁺), and a carbonate ion (CO₃²⁻) in the raw material solution.

Therefore, it is desirable that the amounts or concentrations of a Ni ion, a Co ion, a Mn ion, ammonia (NH₃), and an ammonium ion (NH₄⁺) in the raw material solution are amounts or concentrations such that the pH of the raw material solution is within the above range.

The molar ratio of Ni, Co, and Mn in the raw material solution may be the same as the desired molar ratio of the positive electrode active material to be produced. The amount of a carbonate ion in the raw material solution is not particularly limited, but is desirably 1 molar time or more, and more desirably 1.5 molar times or more with respect to the total of Ni, Co, and Mn. It should be noted that even if the amount of a carbonate ion in the raw material solution is less than 1 molar time with respect to the total of Ni, Co, and Mn, the crystallization step S110 can be carried out by including a carbonate ion in the precipitation solution.

The precipitation solution functions to precipitate a Ni ion, a Co ion, a Mn ion, and a carbonate ion contained in the raw material solution as a composite carbonate containing Ni, Co, and Mn (i.e., a nickel cobalt manganese composite carbonate) when the raw material solution is added. Therefore, the ammonia concentration in the precipitation solution is lower than the ammonia concentration in the raw material solution.

The precipitation solution is not particularly limited as long as the ammonia concentration thereof is lower than that of the raw material solution. The precipitation solution may be an ammonium ion donor. Therefore, for example, the precipitation solution may be an aqueous solution of an ammonium salt such as ammonium carbonate, ammonium sulfate, or ammonium chloride. Among these, ammonium carbonate is desirable because it is composed only of components contained in the raw material solution (i.e., contains no impurities) and can supply a carbonate ion to promote precipitation of carbonates. Further, water (e.g., ion-exchanged water, distilled water, etc.) can be used as the precipitation solution. When water is used, preparation of the precipitation solution is easy, which is also advantageous in terms of cost.

In the raw material solution, a Ni ion, a Co ion, and a Mn ion each form an ammine complexe with ammonia and an ammonium ion, whereby Ni, Co, and Mn are in a stable state. Here, by evaporating ammonia from the raw material solution, a crystallization reaction of Ni, Co, and Mn can be induced. However, among the complexes of Ni, Co, and Mn, the complex of Mn is the most unstable. Therefore, in the initial stage of the crystallization reaction, Mn precipitates in large amounts, and in the later stage of the crystallization reaction, Mn precipitates only slightly. As a result, in the center portion of the particles of the precipitated carbonate, the proportion of Mn present is high, and in the surface layer portion of the particles, the proportion of Mn present is low. Therefore, uneven distribution of Mn occurs in the center portion of the carbonate particles. This is because when ammonia is evaporated from the raw material solution, the change in ammonia concentration is gradual.

In the production method of the present disclosure, the ammonia concentration in the precipitation solution is lower than the ammonia concentration in the raw material solution. Therefore, when the raw material solution is added into the precipitation solution, the ammonia concentration in the vicinity of the ammine complexes rapidly decreases, and all of the complexes of Ni, Co, and Mn in the raw material solution become unstable. Therefore, all of Ni, Co, and Mn precipitate at about the same rate. As a result, uneven distribution of Mn in the center portion of the particles of the carbonate to be precipitated is suppressed.

From the viewpoint of effectively exerting such an action, as a guide for the ammonia concentration, the pH of the precipitation solution at 25°C is desirably less than 10.0, more desirably 9.5 or less, still more desirably 9.0 or less, and particularly desirably 8.0 or less. The lower limit of the pH of the precipitation solution at 25°C is not particularly limited. When water is used as the precipitation solution, the pH can drop to about 5.2 due to carbon dioxide in the air dissolving into the water. Taking this into consideration, the lower limit of the pH of the precipitation solution at 25°C may be 5.2 or more, desirably 6.5 or more, and more desirably 7.0 or more.

Crystallization can be performed, for example, specifically as follows. A known reaction tank used for crystallization is prepared. The reaction tank may include heating means such as a heater, temperature measuring means such as a thermometer or a temperature sensor, pH measuring means such as a pH meter, stirring means such as a stirring blade or a magnetic stirrer, and the like.

The precipitation solution is charged into this reaction tank. Then, the raw material solution is added to the precipitation solution. Here, from the viewpoint of increasing the change in ammonia concentration, it is desirable to add the raw material solution by dropping it into the precipitation solution. By dropping the raw material solution into the precipitation solution, a reaction solution is formed in the reaction tank.

The pH of the reaction solution at 25°C during crystallization is desirably 10.0 or less, and more desirably 9.5 or less. Therefore, it is desirable to adjust the amount and addition rate of the raw material solution so that the pH of the reaction solution does not exceed the above range.

The crystallization temperature is not particularly limited as long as a crystallization reaction occurs. Crystallization may be performed at room temperature (i.e., 25°C±10°C) or under heating. The crystallization temperature is desirably 45°C or more, more desirably 60°C or more, and still more desirably 80°C or more. On the other hand, the crystallization temperature may be less than the boiling point of the reaction solution, and may be less than 100°C.

It is desirable to perform stirring during crystallization. The stirring speed is not particularly limited, but is desirably 200 rpm or more, more desirably 400 rpm or more, and still more desirably 600 rpm or more. The stirring speed may be 2000 rpm or less, 1000 rpm or less, or 800 rpm or less.

The crystallization time is not particularly limited, and can be appropriately determined according to the leaching temperature, stirring speed, and the like. The crystallization time is, for example, 10 minutes or more, desirably 1 hour or more, and more desirably 2 hours or more. From the viewpoint of operational efficiency, the crystallization time is, for example, 48 hours or less, desirably 24 hours or less, more desirably 12 hours or less, and still more desirably 6 hours or less.

By performing crystallization, a carbonate containing Ni, Co, and Mn can be precipitated. The precipitated carbonate containing Ni, Co, and Mn can be recovered according to a known method. For example, the precipitated carbonate containing Ni, Co, and Mn can be recovered by separating the precipitated carbonate containing Ni, Co, and Mn from the aqueous phase by solid-liquid separation such as filtration, washing with water, and drying.

The aqueous phase after solid-liquid separation contains ammonia and unreacted ammonium carbonate. This aqueous phase can be reused in a step using ammonia and ammonium carbonate in recycling of waste of lithium-ion secondary batteries by adjusting the component amount, pH, and the like. Alternatively, ammonia and ammonium carbonate can be recovered from this aqueous phase and reused in a step using ammonia and a step using ammonium carbonate in recycling of waste of lithium-ion secondary batteries.

As described above, by the crystallization step S110, a carbonate containing Ni, Co, and Mn (i.e., a nickel cobalt manganese composite carbonate) that is a precursor of a positive electrode active material can be obtained. The carbonate can be used for the production of a positive electrode active material for lithium-ion secondary batteries. Hereinafter, this will be specifically described.

### <Method for Producing Positive Electrode Active Material>

The method for producing a positive electrode active material includes a step of obtaining a precursor by the method for producing a precursor of a positive electrode active material of the present disclosure described above (hereinafter also referred to as "precursor preparation step"), a step of mixing the precursor and a lithium compound to obtain a mixture (hereinafter also referred to as "mixing step"), and a step of firing the mixture (hereinafter also referred to as "firing step").

The method for producing a positive electrode active material will be specifically described. The precursor preparation step is as described above for the method for producing a precursor of a positive electrode active material of the present disclosure.

Before the mixing step, the precursor may be heat-treated. At this time, the precursor may be converted into an oxide. A composite oxide containing Ni, Co, and Mn also plays the role of a precursor of a positive electrode active material. When converting to an oxide, the heat treatment temperature is desirably 300°C or more and 1000°C or less. The heat treatment time is desirably 1 hour or more, more desirably 1 hour or more and 48 hours or less, and still more desirably 5 hours or more and 24 hours or less. The heat treatment can be performed in the air.

The lithium compound used in the mixing step serves as a Li source for the positive electrode active material. As the lithium compound, for example, a lithium compound that is converted into an oxide by firing, such as lithium carbonate, lithium nitrate, or lithium hydroxide can be used.

The mixing ratio of the lithium compound and the precursor may be appropriately determined according to the composition of the desired positive electrode active material. For example, in the positive electrode active material, the ratio of Li to metals other than Li (typically, the total of Ni, Co, and Mn) is desirably 0.95 to 1.15. Therefore, desirably, the lithium compound and the precursor are mixed so that the molar ratio of Li contained in the lithium compound to the metal (typically, the total of Ni, Co, and Mn) contained in the precursor is 0.95 to 1.15.

When it is desired to introduce a metal other than Li (also referred to as another metal) that is not contained in the precursor into the positive electrode active material, another metal source may be further mixed according to a known method.

Mixing of the lithium compound and the precursor can be performed according to a known method. For example, it can be performed by mixing the precursor and the lithium compound using a mixing device such as a shaker mixer, V blender, ribbon mixer, Julia mixer, or Lödige mixer. Thereby, a mixture can be obtained.

The firing step can be performed according to a known method. For example, firing of the mixture can be performed using a known electric furnace or the like. As the atmosphere for firing, an oxidizing atmosphere is desirable from the viewpoint of suppressing oxygen defects in the positive electrode active material. Desirably as the oxidizing atmosphere is an atmosphere with an oxygen concentration of 10 vol% or more, and may be an air atmosphere or an oxygen atmosphere (i.e., an atmosphere in which the oxygen concentration is higher than that of the air). The firing temperature is, for example, 650°C to 1000°C, and desirably 700°C to 900°C. The firing time is, for example, 3 hours to 8 hours, and desirably 3.5 hours to 7.5 hours.

As described above, a lithium nickel cobalt manganese composite oxide that is a positive electrode active material can be produced. The positive electrode active material can be used in lithium-ion secondary batteries according to a known method.

Hereinafter, Examples relating to the present disclosure will be described in detail, but it is not intended to limit the present disclosure to those shown in such Examples.

### [Preparation of Raw Material Solution]

Ni metal, Co metal, and Mn oxide were dissolved in an ammonium carbonate aqueous solution. At this time, the molar ratio of Ni, Co, and Mn was set to 90:5:5. Further, the amount of ammonium carbonate was 1.5 molar times the total of Ni and Co. The ammonium concentration of the ammonium carbonate aqueous solution was 13 mol/L. The obtained solution was used as a raw material solution. The pH of the raw material solution at 25°C measured by the following method was 11.

### [pH Measurement]

In the Examples and Comparative Examples, the pH of each solution was measured using a commercially available pH meter (desktop pH meter "F-71S" manufactured by HORIBA, Ltd.).

### [Comparative Example 1]

The above raw material solution was charged into a reaction tank. Heating to 80°C was performed, and ammonia was evaporated under stirring to allow a crystallization reaction to proceed. The crystallization product and the reaction solution were sampled in small amounts at regular intervals, and after cooling, the pH of the reaction solution at 25°C was measured. When the fluctuation of the pH in the reaction tank became small, heating was terminated. The pH after crystallization at this time was 9.3. Thereafter, solid-liquid separation was performed by filtration, and the crystallization product was obtained by washing with water.

### [Example 1]

An ammonium carbonate aqueous solution having a pH of 9.0 at 25°C was prepared as a precipitation solution. This was charged into a reaction tank. The precipitation solution was heated to 80°C, and the above raw material solution was supplied to the precipitation solution by dropping while stirring to allow a crystallization reaction to proceed. The crystallization product and the reaction solution were sampled in small amounts at regular intervals, and after cooling, the pH of the reaction solution at 25°C was measured. When the pH of the reaction solution in the reaction tank rose to 10.7, dropping of the raw material solution and heating were terminated. The pH after crystallization at this time was 10.7. Thereafter, solid-liquid separation was performed by filtration, and the crystallization product was obtained by washing with water.

### [Example 2]

The dropping rate of the raw material solution was adjusted to control so that the pH of the reaction solution in the reaction tank did not rise during the reaction. A crystallization product was obtained in the same manner as in Example 1, except that dropping of the raw material solution and heating were terminated when the pH of the reaction solution in the reaction tank rose to 9.4.

### [Example 3]

Pure water having a pH of 7.0 at 25°C was prepared as a precipitation solution. This was charged into a reaction tank. The precipitation solution was heated to 80°C, and the above raw material solution was supplied to the precipitation solution by dropping while stirring. When the pH of the reaction solution in the reaction tank rose to 10.5, dropping of the raw material solution and heating were terminated. Thereafter, solid-liquid separation was performed by filtration, and the crystallization product was obtained by washing with water.

### [Example 4]

The dropping rate of the raw material solution was adjusted to control so that the pH of the reaction solution in the reaction tank did not rise during the reaction. A crystallization product was obtained in the same manner as in Example 3, except that dropping of the raw material solution and heating were terminated when the pH of the reaction solution in the reaction tank rose to 9.2.

### [Example 5]

A crystallization product was obtained in the same manner as in Example 4, except that the temperature in the reaction tank was set to 90°C.

### [Example 6]

A crystallization product was obtained in the same manner as in Example 4, except that the temperature in the reaction tank was set to 70°C.

### [Example 7]

A crystallization product was obtained in the same manner as in Example 4, except that the temperature in the reaction tank was set to 60°C.

### [Example 8]

A crystallization product was obtained in the same manner as in Example 4, except that the temperature in the reaction tank was set to 45°C and dropping of the raw material solution and heating were terminated when the pH of the reaction solution in the reaction tank rose to 9.4.

### [Evaluation of Mn Segregation Rate]

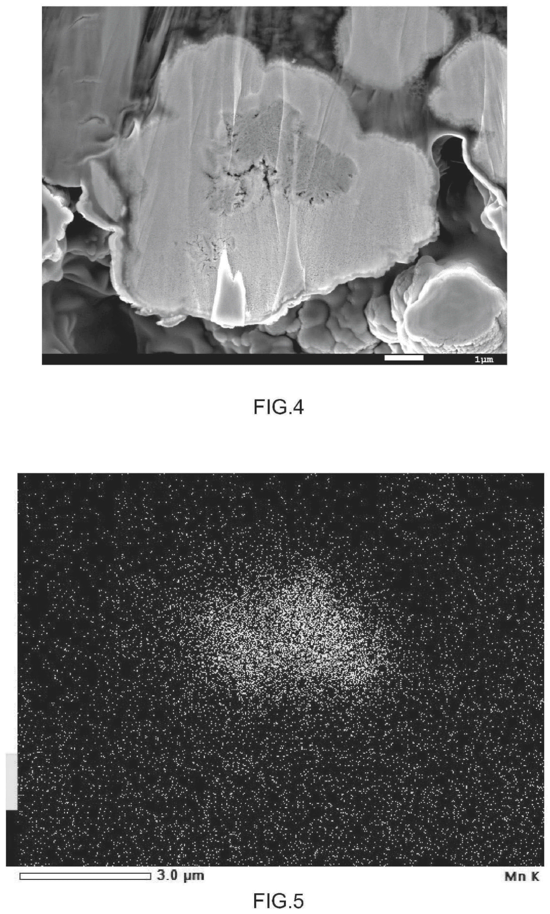

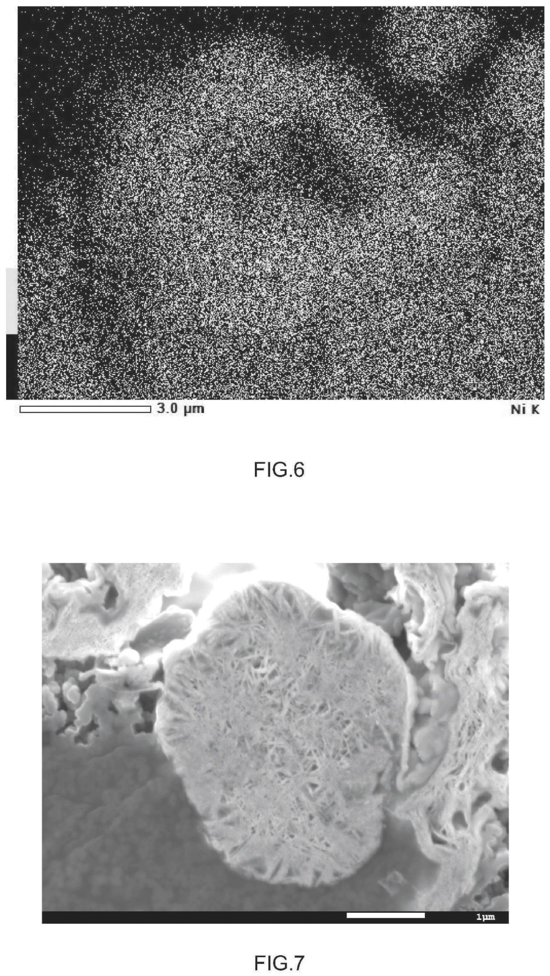

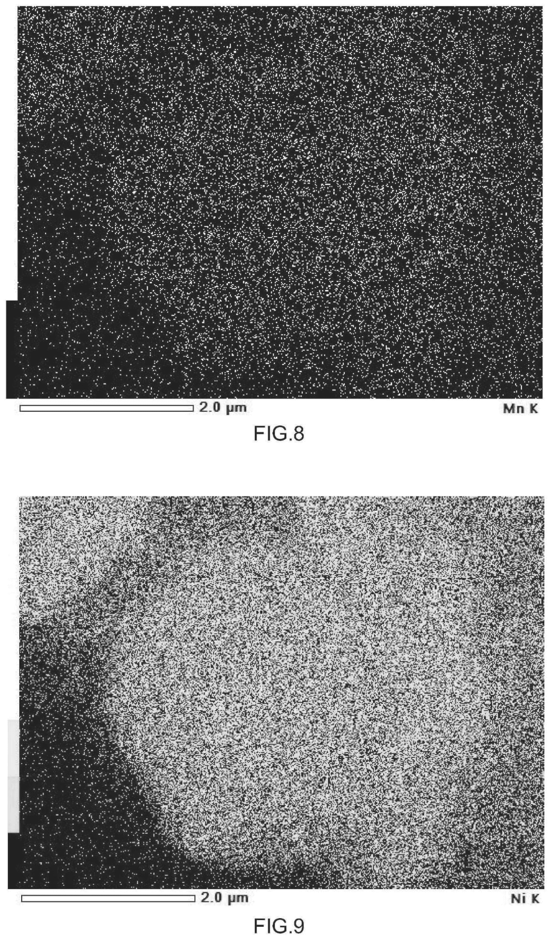

A sample in which a particle cross-section of the crystallization product obtained in Comparative Example 1 and each Example was exposed was prepared according to a conventional method. The sample was observed using a scanning electron microscope (SEM), and particles having a particle diameter of several µm were selected. Analysis was performed by energy dispersive X-ray spectroscopy (EDS) on the center portion and the surface layer portion of the selected particles, and the Mn abundance ratio in each of the center portion and the surface layer portion was determined. For 10 particles, the value of "Mn abundance ratio in center portion / Mn abundance ratio in surface layer portion" was calculated, and the average value was taken as the Mn segregation ratio. The results are shown in Table 1. It should be noted that when Mn is not unevenly distributed, the Mn segregation ratio is 1.0. Further, for reference, a particle cross-sectional image, an Mn mapping image of a particle cross-section, and an Ni mapping image of a particle cross-section, of Comparative Example 1 are shown in FIGS. 4 to 6, respectively. Further, a particle cross-sectional image, an Mn mapping image of a particle cross-section, and an Ni mapping image of a particle cross-section, of Example 4 are shown in FIGS. 7 to 9, respectively.

### [Table 1]

**Table 1**

| | Crystallization method | pH before crystallization | pH after crystallization | Crystallization temperature(°C) | Mn segregation ratio |
|---|---|---|---|---|---|
| Comparative Example 1 | Direct evaporation | 11.0 | 9.3 | 80 | 90.9 |
| Example 1 | Dropping crystallization | 9.0 | 10.7 | 80 | 0.2 |
| Example 2 | Dropping crystallization | 9.0 | 9.4 | 80 | 1.0 |
| Example 3 | Dropping crystallization | 7.0 | 10.5 | 80 | 0.8 |
| Example 4 | Dropping crystallization | 7.0 | 9.2 | 80 | 1.0 |
| Example 5 | Dropping crystallization | 7.0 | 9.2 | 90 | 1.0 |
| Example 6 | Dropping crystallization | 7.0 | 9.2 | 70 | 1.0 |
| Example 7 | Dropping crystallization | 7.0 | 9.2 | 60 | 1.0 |
| Example 8 | Dropping crystallization | 7.0 | 9.4 | 45 | 1.0 |

As shown by the results in FIGS. 4 to 6 and Table 1, in Comparative Example 1 in which the carbonate was precipitated by evaporating ammonia, Mn was unevenly distributed in the center portion of the particles, and the ratio (Mn abundance ratio in center portion / Mn abundance ratio in surface layer portion) was 90.9, which was extremely high.

On the other hand, as shown by the results in FIGS. 7 to 9 and Table 1, in Examples 1 to 8 in which the carbonate was precipitated by dropping the raw material solution into a precipitation solution having a lower ammonia concentration than the raw material solution, uneven distribution of Mn in the center portion of the particles could be suppressed. Further, from the comparison between Example 1 and Example 2, it can be seen that uneven distribution of Mn can be further suppressed by dropping the raw material solution so that the pH does not rise during crystallization, because the crystallization reaction proceeds in a state where the evaporation rate of ammonia is sufficiently fast. Furthermore, from the comparison between Example 2 and Example 4, it can be seen that uneven distribution of Mn can be further suppressed when the pH of the precipitation solution is lower. This is considered to be because when no ammonia source is present in the precipitation solution in the reaction tank, the ammonia concentration around the ammine complexes of Ni, Co, and Mn in the raw material solution rapidly decreases, all the ammine complexes become unstable, and as a result, all of Ni, Co, and Mn precipitate at about the same rate.

From the above results, it can be seen that according to the method for producing a precursor of a positive electrode active material of the present disclosure, uneven distribution of Mn in the center portion of particles can be suppressed.

Although specific examples of the present disclosure have been described in detail above, these are merely examples and do not limit the scope of claims. The technology described in the scope of claims includes various modifications and changes of the specific examples illustrated above.

That is, the method for producing a precursor of a positive electrode active material and the method for producing a positive electrode active material of the present disclosure are the following items [1] to [9].
[1] A method for producing a precursor of a positive electrode active material, including a step of adding a raw material solution containing Ni, Co, Mn, ammonia, an ammonium ion, and a carbonate ion to a precipitation solution to precipitate a carbonate containing Ni, Co, and Mn,
   wherein the concentration of ammonia in the precipitation solution is lower than the concentration of ammonia in the raw material solution.
[2] The production method according to item [1], wherein a pH of the raw material solution at 25°C is 10.0 to 12.0, and a pH of the precipitation solution at 25°C is less than 10.0.
[3] The production method according to item [2], wherein the pH of the precipitation solution at 25°C is 9.5 or less.
[4] The production method according to item [2], wherein the pH of the precipitation solution at 25°C is 8.0 or less.
[5] The production method according to any one of items [1] to [4], wherein the precipitation solution is water or an ammonium carbonate aqueous solution.
[6] The production method according to any one of items [1] to [4], wherein the precipitation solution is water.
[7] The production method according to any one of items [1] to [6], wherein a pH at 25°C of a reaction solution obtained by adding the raw material solution to the precipitation solution is 10.0 or less.
[8] The production method according to any one of items [1] to [7], wherein the raw material solution includes a solution generated in recycling of waste of lithium-ion secondary batteries.
[9] A method for producing a positive electrode active material, including:
   a step of obtaining a precursor by the method for producing a precursor of a positive electrode active material according to any one of items [1] to [8],
   a step of mixing the obtained precursor and a lithium compound to obtain a mixture, and
   a step of firing the obtained mixture.

## Claims

1. A method for producing a precursor of a positive electrode active material, comprising a step (S110) of adding a raw material solution containing Ni, Co, Mn, ammonia, an ammonium ion, and a carbonate ion to a precipitation solution to precipitate a carbonate containing Ni, Co, and Mn,
wherein the concentration of ammonia in the precipitation solution is lower than the concentration of ammonia in the raw material solution.

2. The production method according to claim 1, wherein a pH of the raw material solution at 25°C is 10.0 to 12.0, and a pH of the precipitation solution at 25°C is less than 10.0.

3. The production method according to claim 2, wherein the pH of the precipitation solution at 25°C is 9.5 or less.

4. The production method according to claim 2, wherein the pH of the precipitation solution at 25°C is 8.0 or less.

5. The production method according to claim 1, wherein the precipitation solution is water or an ammonium carbonate aqueous solution.

6. The production method according to claim 1, wherein the precipitation solution is water.

7. The production method according to claim 1, wherein a pH at 25°C of a reaction solution obtained by adding the raw material solution to the precipitation solution is 10.0 or less.

8. The production method according to claim 1, wherein the raw material solution includes a solution generated in recycling of waste of lithium-ion secondary batteries (100).

9. A method for producing a positive electrode active material, comprising:
a step of obtaining a precursor by the method for producing a precursor of a positive electrode active material according to claim 1,
a step of mixing the obtained precursor and a lithium compound to obtain a mixture, and
a step of firing the obtained mixture.
